# EUROPEAN PATENT APPLICATION

(11) **EP 2 143 490 A1**
(43) Date of publication of application: **13.01.2010**
(21) Application number: 08012273.2
(22) Date of filing: 08.07.2008
(51) Int. Cl.: B01J 35/04, B01J 37/00, B01J 37/02

(54) **Porous ceramic catalysts and methods for their production and use**

(71) Applicant: ETH Zurich, 8092 Zurich (CH)
(72) Inventor: Hotz, Nico, 8051 Zurich (CH); Poulikakos, Dimos, 8702 Zollikon (CH); Studart, André R., CEP 13567-680 Sao Carlos-SP (BR); Gauckler, Ludwig, 8049 Zürich (CH)

(57) **Abstract**

A method of producing a rigid catalytically active porous ceramic is disclosed. Catalyst particles comprising a catalytically active material or a precursor thereof are mixed with a chemical additive, a ceramic binder, a carrier liquid and, optionally, substantially inert carrier particles to obtain a slurry having a gel- or paste-like consistency. The slurry may be transported to a substrate, e.g., by printing, or to a reactor cavity by a suitable flow method. The slurry is then heated to substantially evaporate said carrier liquid to obtain a rigid, catalytically active porous ceramic *in situ.* A catalyst obtainable by such a method and the use of such a catalyst are also disclosed.

## Description

### Field of the invention

The present invention relates to a method of producing a catalytically active porous ceramic (a "porous ceramic catalyst"), to a porous ceramic obtainable by such a process, and to methods of use of such porous ceramics.

### Prior art

Porous ceramics are known as promising materials for structured catalyst supports due to their porosity, open-cell structure, thermal and chemical stability, and variable thermal conductivity. In the following, the term "porous ceramic" is used to designate any continuous, open-cell structure comprising a ceramic material, the cells forming an interconnected network.

The fabrication procedure of a porous ceramic catalyst typically involves first generating a ceramic foam as a support, e.g., by filling the voids in a polymer foam template with a ceramic material and eroding the polymer template, and by subsequently coating this foam in a second step with a catalytically active material, using appropriate coating/impregnation methods. A common method is the impregnation of a calcined porous ceramic material with a liquid precursor containing a catalytically active material, as described, e.g., in the following publications:
- Twigg M.V., Richardson J.T., "Fundamentals and applications of structured ceramic foam catalysts", Industrial and Engineering Chemistry Research 46 (12), 2007, pp. 4166-4177.
- Snijkers F., Mullens S., Buekenhoudt A., Vandermeulen W., Luyten J., "Ceramic foams coated with zeolite crystals", Functionaly Graded Materials VIII Materials Science Forum 492-493, 2005, pp. 299-303.
- Reitzmann A., Patcas F.C., Kraushaar-Czarnetzki B., "Keramische Schwämme - Anwendungspotenzial monolithischer Netzstrukturen als katalytische Packungen", Chemie Ingenieur Technik 78 (7), 2006, pp. 885-898.
- Schimmoeller B., Schulz H., Pratsinis S.E., Bareiss A., Reitzmann A., Kraushaar-Czarnetzki B., "Ceramic foams directly-coated with flame-made V2O5/TiO2 for synthesis of phthalic anhydride", Journal of Catalysis 243, 2006, pp. 82-92 describe a direct deposition technique for catalytically active nanoparticles on a prefabricated ceramic foam support.

The catalyst may be applied to the support by sol-gelation, as described, e.g., in Liguras D.K., Goundani K., Verykios X.E., "Production of hydrogen for fuel cells by catalytic partial oxidation of ethanol over structured Ni catalysts", Journal of Power Sources 130 (1-2), 2004, pp. 30-37.

Production of a porous ceramic catalyst by coating a foam support has, however, several inherent disadvantages. In particular, such a production process often leads to an inhomogeneous distribution of the catalytically active material in the final product. Furthermore, the resulting distribution often cannot reliably be determined after coating/impregnation without destruction of the porous material. In addition, it is normally impossible to produce such a ceramic foam catalyst *in situ*, i.e., in the final reactor geometry. In particular, impregnating the ceramic foam support in the final reactor with a liquid precursor is normally impossible because the liquid precursor would stick not only to the ceramic foam support, but also to the reactor walls. Producing a porous catalyst *in situ* in the final reactor geometry would, however, be highly desirable since this has the potential to avoid some of the common problems with monolithic structured catalysts, such as gas bypass between the catalyst and the reactor walls.

It would therefore be desirable to produce a porous ceramic catalyst directly from its catalytically active components, thus avoiding a coating or impregnation step. However, there has been a prejudice in the art that technically useful porous ceramic catalysts cannot be produced from the catalytically active components themselves because of mechanical stability problems. It has been commonly believed that such stability problems can only be avoided by sintering the ceramic at high sinter temperatures, which is often not possible or desirable (cf., e.g., the article by Reitzmann et al., *loc. cit*.).

WO 01/81241 describes a foam catalyst consisting of pure, unsupported rhodium. However, such a foam catalyst requires very large amounts of the precious catalytically active material, here rhodium, to achieve the same catalytically active surface area as a coated porous ceramic material. In addition, the production techniques appropriate for producing an unsupported rhodium foam cannot be readily applied for other kinds of catalytically active materials. Furthermore, these production techniques are not well-suited for a production *in situ*.

### Summary of the invention

It is an object of the present invention to provide a cost-efficient method of producing a solid structured foam-type catalyst in a "one-step" procedure which does not require coating of a support with catalytically active material. It is a further object of the present invention to provide a method of producing a solid foam-type catalyst that is suitable to provide the catalyst *in situ* in a final reactor geometry or on a substrate, without a need to transfer the rigid catalyst to the final geometry after production.

These and other objects are achieved by a method of producing a rigid catalytically active porous ceramic, the method having the features of claim 1.

The method of the present invention thus comprises:
providing catalyst particles comprising a catalytically active material or a precursor thereof;
mixing said catalyst particles with a ceramic binder, a carrier liquid, at least one chemical additive for promoting dispersion and/or controlling gelation, and, optionally, substantially inert carrier particles to obtain a slurry having a gel- or paste-like consistency;
optionally, transporting said slurry to a desired location, in particular, by a flow method; and
heating said slurry to substantially evaporate said carrier liquid to obtain a rigid, catalytically active porous ceramic.

This procedure defines a sol-gelation method for direct, one-step fabrication of a catalytically active porous ceramic that may be used to provide the porous material *in situ* in a desired location. At the setout, particles containing a certain, predefined amount of a catalyst (e.g., a noble metal) or of a catalyst precursor are provided. These particles are mixed with a chemical additive, a ceramic binder, and a carrier liquid. Optionally, inert carrier particles may additionally be provided. The mixture is preferably agitated, in particular by mechanical stirring, until the desired consistency is obtained. By mixing these components in an appropriate ratio, a gel- or paste-like, highly viscous slurry is generated. The slurry may be easily transported to a desired location, e.g. onto a substrate or into a cavity, by any suitable flow or mechanical application method. Once the slurry has been positioned at the desired location, the slurry is heated to an increased temperature (e.g. to around the boiling temperature of the carrier liquid) and kept at this temperature for a certain time to evaporate all liquid material (drying step). The resulting rigid, monolithic, reticulated porous ceramic generally does not need any further thermal or chemical treatment; however, such optional additional steps may be also envisaged. In particular, the porous ceramic does not require any sintering.

The proposed method has several advantages compared to the conventional method of coating or impregnating a prefabricated ceramic foam with a catalytic material, or to packing catalyst particles into reactor cavities. In particular, the catalyst particles are very homogeneously dispersed in the porous ceramic material. The existence of loose or dry particles, as in certain coating techniques or in conventional packed-bed reactors, is avoided. The porous ceramic sticks very well together and does not require any kind of filters or ceramic fiber plugs to fix its position. The catalyst particles cannot erode from the reactor, which is a crucial problem in packed bed reactors consisting of loose particles.

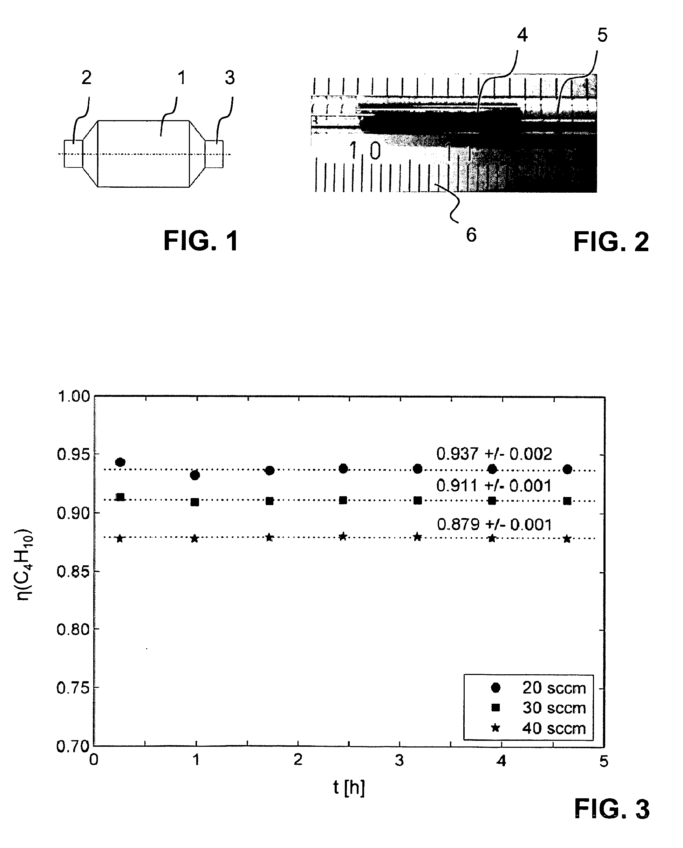

A key advantage of the proposed method is that it is possible to produce the final catalytic porous ceramic *in situ* in a desired location, e.g., in a reactor cavity or on a substrate. To this end, the method may comprise a step of transporting the slurry to a reaction zone in a reactor, in particular, by a flow method, wherein said slurry is heated in said reaction zone to evaporate said carrier liquid so as to obtain said rigid, catalytically active porous ceramic *in situ* in said reaction zone. In particular, the slurry may be transported to the reaction zone by simply pushing it with pressurized gas (e.g., by making it flow as a plug through a tube). Production of the rigid porous ceramic *in situ* is especially advantageous when dealing with a reactor with varying cross section (typically a smaller cross section at the inlet and the outlet of the reactor, such as the reactor 1 of Fig. 1, having an inlet 2 and an outlet 3), e.g., in mini-/micro-scale applications, since a rigid foam cannot be introduced into such a closed reactor without opening the reactor. Alternatively, the proposed method may comprise a step of applying the slurry to a substrate, wherein said slurry is heated on said substrate to evaporate said carrier liquid so as to obtain a substrate bonded with said rigid, catalytically active porous ceramic. In particular, the step of applying said slurry to said substrate may comprise printing said slurry to said substrate by a printing process, in particular, by a printing process selected from the group consisting of jet printing, gravure printing, relief printing, and screen printing.

The dried, rigid porous ceramic will generally stick well to the substrate or reactor wall without any gap or void space in between. This avoids bypassing of gas around the catalytic material.

Optionally, inert carrier particles are mixed with the catalyst particles and the other components of the slurry, where the term "inert" indicates that these particles do not chemically interfere in a negative manner with the activity of the catalyst particles. Preferably, these inert particles have a larger average diameter than the catalyst particles, in particular, an average diameter that is at least two orders of magnitude (a factor of 100), advantageously at least three orders of magnitude (a factor of 1000) larger than the average diameter of the catalyst particles. Preferably, the inert particles have an average diameter above approximately 10 micrometers, more preferred at least 50 micrometers. The average diameter (or average size) is to be understood as the geometric mean diameter of imaginary spheres having the same volume as the particles. These inert particles serve as a kind of padding material to increase the pore size and therefore reduce the pressure drop in the finally produced porous ceramic reactor, and to avoid hot spots by their relatively large thermal conductivity. The inert particles may consist of, e.g. silica (SiO₂) sand or of an inert ceramic material, e.g. a ceramic on the basis of silica, alumina, zirconia and/or mixed oxides of silicon, aluminum, and zirconium, or of any other solid, inert, heat-resistant material. The inert particles are preferably present in a mass fraction of approximately 30% to 50%, more preferred 33% to 40%, in particular 36% to 40% of the slurry (before drying). Such inert carrier particles may be omitted, in particular, if the catalyst particles themselves have a sufficiently broad size distribution (e.g., over at least two or three orders of magnitude) to ensure that the final product forms an open-cell porous network having both a sufficiently low pressure drop and a sufficiently large surface area.

If carrier particles are present, the catalyst particles are preferably nanoparticles, i.e. particles having an average size below approximately 1 micrometer, preferably below 100 nm or even below 30 nm, in particular, an average size of about 10 nm or less.

The catalyst particles may comprise any suitable catalytically active material for a desired catalytic reaction or substantially consist of such a material. In particular, the catalyst particles may comprise one or more metals, specifically, one or more transition metals, in particular noble metals, in particular noble metals selected from the group consisting of rhodium, palladium and platinum. In addition, the catalyst particles may comprise a catalytically inert base material or a thermally stable base material that supports the catalytic activity, e.g., a material selected from the group consisting of alumina, silica, ceria, zirconia and mixed oxides of cerium and zirconium. However, other kinds of catalytically active materials for specific applications are also contemplated, such as one or more metal oxides, in particular one or more oxides of Fe, Co, Ni, Cu, Va, Mo, W, Cr, Mn or Zn, of the alkaline earth metals, or of a rare earth metal, or any other material that is active in any of various chemical oxidation reactions.

If carrier particles are present, the mass fraction of the catalyst particles in the slurry is preferably between 10% and 16%, more preferred 12% to 14% of the slurry. Preferably, the mass ratio of catalyst particles to inert particles is approximately between 1:1 and 1:10, in particular, between 1:2 and 1:4. The optimum ratio depends on the type of catalyst and on the average sizes of both catalyst and inert particles.

The ceramic binder is preferably selected from the group consisting of sulfate-based binders, in particular, calcium sulfate-based binders, silicate-based binders, in particular sodium metasilicate pentahydrate or calcium silicates such as Portland cement, alumina-based binders, such as the binder known as Alpha-bond™ 300 available from Almatis GmbH, Lyoner Straße 9, 60528 Frankfurt/Germany, phosphate-based binders, e.g. mixtures of phosphoric acid and phosphate salts, and mixtures thereof. The exact amount is not critical. Preferably, the binder is present in a mass fraction of 0.5% to 5% of the slurry, more preferred 1% to 2%, depending on the binder. If the amount is too large, the slurry tends to be too sticky; if, on the other hand, the amount is too low, the resulting porous ceramic tends to become too brittle.

As a carrier liquid, preferably water is chosen, as the evaporation of water can be well controlled, resulting in little fracture or rupture of the porous ceramic during drying. However, in principle other carrier liquids may be chosen, such as alcohols. The mass fraction of carrier liquid in the slurry is preferably 40% to 60%, more preferred 45% to 50%. The carrier liquid is preferably evaporated in the drying step by slowly heating the slurry to around the boiling point of the carrier liquid and keeping the slurry at or around the boiling point until the carrier liquid has evaporated. In the case of water, the slurry is preferably heated at a rate below approximately 10 °C/min, more preferred below 5 °C/min. However, the exact protocol is not critical as long as the carrier liquid is evaporated relatively slowly.

The chemical additive is an additive suitable to disperse the catalyst particles and, if present, the optional inert ceramic particles, and/or to control the gelation reaction by hydrolysis and/or condensation of the ceramic binder. In particular, any known compound normally used for these purposes in other sol-gel processes may be employed. More specifically, the additive may act as a kind of catalyst for starting the gelation process or as a retardant to slow down the gelation process when the slurry is formed. The chemical additive is preferably an acid, in particular, an acid selected from the group of mono-, di- and tricarboxylic acids, in particular, citric acid, and salts thereof, citric acid and salts thereof being preferred if the carrier liquid is water, or from nitric, hydrochloric, and other acids and salts thereof. The acid in this case promotes the dispersion of particles in suspension and acts as a pH adjusting agent to decrease the pH such that no condensation happens while the wet paste is applied. This chemical additive preferably has a mass fraction of 0.3% to 2% of the slurry, more preferred 0.5% to 1%.

According to a further aspect of the present invention, a catalytically active porous ceramic obtainable by a method as claimed in any of claims 1 to 13 is provided.

According to a further aspect of the present invention, a catalytically active porous ceramic is provided which has a continuous open-cell structure forming continuous channels, said porous ceramic comprising catalyst particles comprising a catalytically active material, catalytically inert particles and a ceramic material, said inert particles having an average size that is at least a factor of 100, preferably at least a factor of 1000 larger than the average diameter of said catalyst particles, and said catalyst particles being bonded to the surface of said inert particles by said ceramic material. Such a porous ceramic is obtainable by a method as claimed in any of claims 5 to 7; however, the invention is not restricted to a porous ceramic obtained by such a method.

According to yet another aspect of the present invention, the invention encompasses the use of such a catalytically active porous ceramic in any of the following processes:
catalytic partial oxidation of a hydrocarbon feedstock, such as natural gas, C₁-C₄ alkanes, or mixtures thereof; in particular, the production of syngas (synthesis gas, a mixture of carbon monoxide and hydrogen) by catalytic partial oxidation of a hydrocarbon feedstock;
steam reforming (reaction with gaseous water) of a hydrocarbon feedstock to obtain syngas;
water gas shift, i.e. the reaction of carbon monoxide with water to obtain carbon dioxide and hydrogen;
carbon dioxide or dry reforming (reaction with carbon dioxide) of a hydrocarbon feedstock to obtain syngas;
catalytic combustion (total oxidation) of a combustible gaseous organic feedstock; and
other catalytic high-temperature reaction processes requiring a chemically and thermally stable reactor material with a very high surface-to-volume ratio at a potentially large gas throughput.

In particular, such use may comprise a process with the steps of:
providing a catalytically active porous ceramic according to the invention in a reaction zone; and
contacting a feed stream with said catalytically active porous ceramic in said reaction zone maintained at reaction-promoting conditions effective to produce an effluent stream.

### Brief description of the drawings

The invention will be described in more detail in connection with an exemplary embodiment illustrated in the drawings, in which
- Fig. 1: shows a schematic reactor geometry;
- Fig. 2: shows a photographic image of a test reactor geometry;
- Fig. 3: shows a diagram of butane conversion vs. time for three different flow rates;
- Fig. 4: shows a diagram of hydrogen selectivity vs. time for three different flow rates;
- Fig. 5: shows a diagram of carbon monoxide selectivity vs. time for three different flow rates; and
- Figs. 6-8: show SEM images of different portions of a catalytic porous ce- ramic sample at different length scales.

### Detailed description of preferred embodiments

### Example 1

Ce_{0.5}Zr_{0.5}O₂ nanoparticles with 2.0 wt% Rh doping were prepared by flame spray synthesis and characterized as described in Hotz N., Stutz, M.J., et al., "Syngas production from butane using a flame-made Rh/Ce_{0.5}Zro_{0.5}O₂ catalyst", Applied Catalysis B-Environmental 73(3-4): 336-344 (2007).

A slurry was produced from the following components:

| | |
|---|---|
| 39 wt% | SiO₂ sand (average diameter 200 µm, Riedel-deHaen) |
| 13 wt% | Rh/Ce_{0.5}Zr_{0.5}O₂ nanoparticles (average diameter 10 nm, Rh content 2.0 wt%) |
| 46 wt% | H₂O |
| 0.5 wt% | Chemical additive: triammonium citrate (purum, >97%, RiedeldeHaen) |
| 1.5 wt% | Ceramic binder: sodium metasilicate pentahydrate |

The components were mixed and stirred mechanically and then treated in an ultrasonic bath, for a few minutes each. The resulting paste- or gel-like mixture was introduced into a long quartz glass tube (inner diameter 2.5 mm, outer diameter 4 mm, length 40 cm). The slurry was pushed with pressurized air to the middle of the tube. It was dried by heating the slurry at a rate of 2.5 °C to 100 °C and keeping the slurry at this temperature for two hours, to obtain a catalytically active porous ceramic of cylindrical shape (diameter 2.5 mm, length approximately 15 mm). Fig. 2 shows a photographic image of the resulting porous ceramic 4 produced *in situ* in the tube 5 on a centimeter scale 6. No residues of the slurry can be seen on the tube wall outside the reaction zone.

The catalytic activity of the porous ceramic was tested by catalytic partial oxidation of butane (PanGas, 99.95% purity) with synthetic air (PanGas, 79% N₂, 21% O₂, 99.9999% purity). The flow rate was controlled by flow meters (Bronckhorst). Flow rates of 20/30/40 sccm (1 sccm = 1 cubic centimeter per minute at standard state = 1 milliliter per minute at standard state = 1.667·10⁻⁸ m³ s⁻¹, where standard state is defined as 25°C and 1.013 bar) total inlet flow rate of butane/air mixture were investigated at a C/O ratio at inlet of 0.8 and an operating temperature of 550 °C. The effluent stream was maintained at about 115 °C to avoid water condensation and was analyzed with a gas chromatograph (6890 GC) coupled with a mass spectrometer (5975 MS, both from Agilent), using a HP-MOLSIV™ and a H P-PlotQ™ column (Agilent), respectively.

The reactor was heated up from room temperature to 550 °C at a heating rate of 12.5 °C/min. Before the inlet flow of the reaction mixture was started, the reactor was flushed with 20 sccm of air for at least 10 min. Each operation point was kept for at least 20 min before the GC/MS measurements were started.

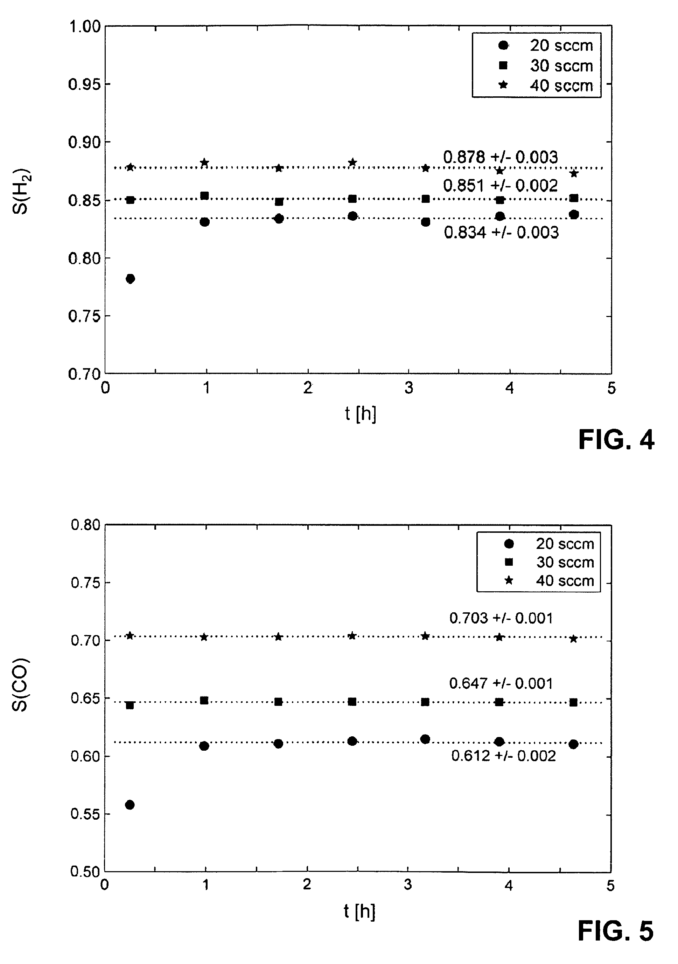

Fig. 3 shows the butane conversion (molar ratio between converted butane and inlet butane), η(C₄H₁₀), thus obtained over time for three flow rates. Fig. 4 shows the H₂ selectivity (molar ratio between generated hydrogen and the sum of generated hydrogen and water), S(H₂), and Fig. 5 shows the CO selectivity (molar ratio between generated CO and sum of generated CO and CO₂), S(CO). All three values remained stable over several hours, proving very stable catalytic activity of the porous ceramic.

The reactor showed similar catalytic behavior and permeability as packed beds of loose catalytic nanoparticles and SiO₂ sand when tested under typical conditions of butane and methane partial oxidation. The porous ceramics resisted to the thermal and chemical conditions for more than 35 hours without showing any destruction of the reactor material or detachment from the wall of the reactor tube. For methane, partial oxidation was performed at temperatures up to 825°C for several hours.

### SEM pictures

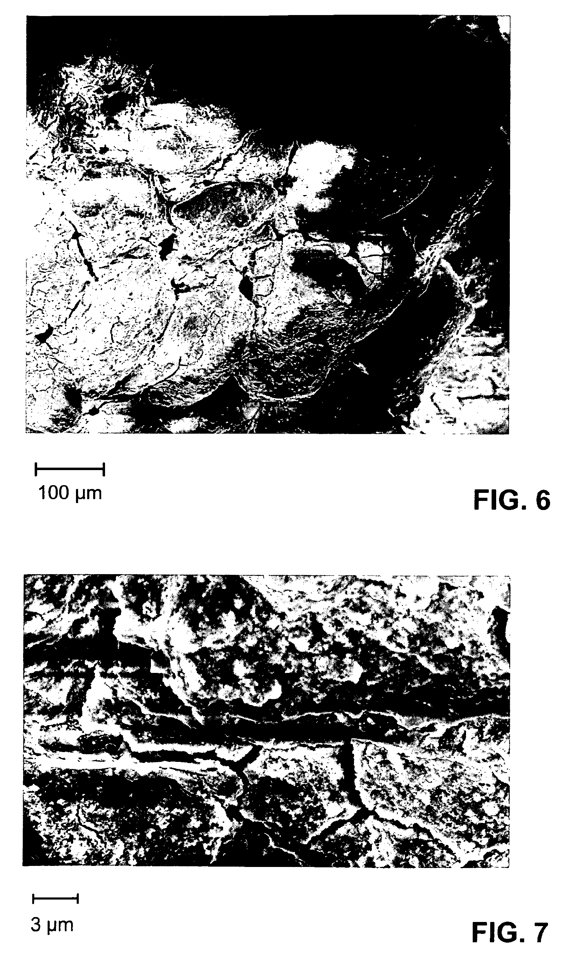

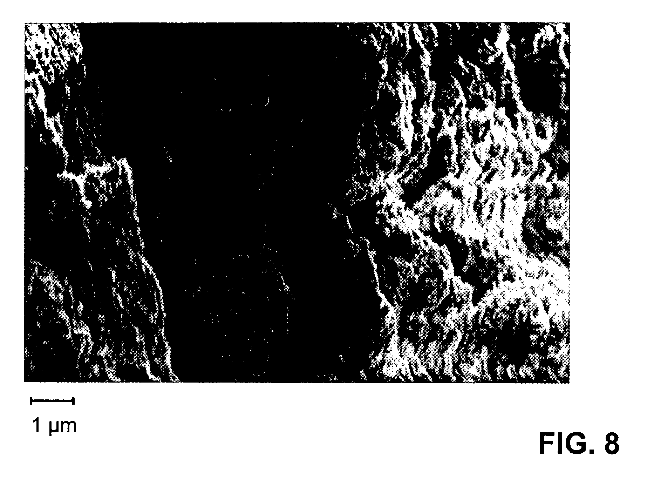

SEM pictures were acquired by standard SEM techniques. Figures 6-8 show three SEM pictures of different sample regions and at different length scales. These SEM pictures show that there are at least two length scales for the particles and pores of the reactor material. On the one hand, relatively large particle and pore sizes in the order of 100 µm can be seen due to the particle diameter of the used SiO₂ sand (Fig. 6) and pores or cracks in the order of 1 µm are visible on the surface of the silica sand (Fig. 7). These large pores allow for a high mass transfer by convection of gas through the reactor at a low pressure drop. On the other hand, a thin layer comprising catalytic nanoparticles covers the surface of the inert particles, here the SiO₂ sand, the layer being bonded together and to the inert particles by the ceramic material. Within this layer, a much smaller length scale of surface structures and pores between approximately 10 and 100 nm can be seen (Fig. 8). This small pore size leads to a large surface-to-volume ratio and therefore, a large catalytically active surface area.

### Additional examples

Various porous ceramics were produced as above, containing different catalyst nanoparticles with two different base materials (mixed cerium/zirconium oxide and alumina, respectively) and containing three different noble metals (Rh, Pt, and Pd, respectively). The nanoparticles had an average diameter of 10 nm. In one further example, a porous ceramic reactor was produced with nanoparticles (ceria/zirconia based, 0.1 wt% Rh) that passed a fine screen of 10 nm. The average diameter of these nanoparticles was unknown, but smaller than 10 nm. Reactors of approximately 4.0, 5.4, 9.6 and 15 mm length were formed.

As inert particles, silica sand of 200 µm diameter was used. In one additional example, silica microparticles with a diameter in the range of 40 - 63 µm were used.

As a ceramic binder, sodium metasilicate pentahydrate was chosen, due to its chemically inert behavior. As an alternative, the commercial binder Alpha-bond™ 300 was used, which creates a ceramic material of practically pure alumina.

Again, a paste- or gel-like precursor slurry was generated by mixing the dry components, including a chemical additive, with water.

As a chemical additive, a citric acid salt (triammonium citrate) was used throughout these examples..

Table 1 summarizes the base materials used in these examples.

**Table 1: Base materials**

| | *Material* | *Noble metal weight fraction* | *Diameter* |
|---|---|---|---|
| *nanoparticles* | Rh/Ce_{0.5}Zr_{0.5}O₂ | 0.1, 0.25, 0.5, 2.0 wt% | 10 nm |
| | Rh/Ce_{0.5}Zr_{0.5}O₂ | 0.1 wt% | < 10 nm |
| | Pt/Ce_{0.5}Zr_{0.5}O₂ | 2.0 wt% | 10 nm |
| | Pd/Pt/ Ce_{0.5}Zr_{0.5}O₂ | 2.49 wt% Pd, 0.01 wt% Pt | 10 nm |
| | Pd/Pt/Al₂O₃ | 2.49 wt% Pd, 0.01 wt% Pt | 10 nm |
| | Pd/Pt/Al₂O₃ | 2.3 wt% Pd, 0.2 wt% Pt | 10 nm |
| *Inert larger particles* | SiO₂ | - | 200 µm |
| | SiO₂ | - | 40 - 63 µm |
| *Ceramic binder* | SiO₃Na₂• | | - |
| | Alphabond™ 300 | | - |
| *Chemical additive* | Triammonium citrate | | - |

One particular porous ceramic each was tested intensively with respect to its catalytic activity for butane-to-syngas conversion and for catalytic combustion of H₂/CO/CH₄/C₄H₁₀ and H₂/CO/CH₄/C₂H₆/C₃H₈/C₄H₁₀ mixtures, respectively. These reactors were produced from the following base components: 200 µm silica particles, sodium metasilicate pentahydrate as binder, catalytic nanoparticles with an average diameter of 10 nm having the composition Rh/Ce_{0.5}Zr_{0.5}O₂ (2.0 wt% Rh) for butane-to-syngas conversion and Pd/Pt/Ce_{0.5}Zr_{0.5}O₂ (2.49 wt% Pd, 0.01 wt% Pt) for catalytic combustion, respectively.

All other compositions (other catalyst composition and smaller nanoparticles, smaller silica particles, different ceramic binders) were tested with respect to their porosity, mechanical and thermal stability. They proved to be as stable as the porous ceramics tested more intensively. The smaller the used particles, the larger the occurring pressure drop. Nevertheless, all porous ceramics allowed sufficient gas flow through the reactors. All porous ceramics showed catalytic activity, but the catalytic performance was not investigated in detail.

Different mass fractions of all components were tested, as given in Table 2.

**Table 2: Mass fractions**

| | Mass fraction tested | most preferred |
|---|---|---|
| Catalyst nanoparticles | 10% - 16% | 12% - 14% |
| Inert larger particles | 33% - 40% | 36% - 40% |
| Ceramic binder | 0.5% - 4% | 1 % - 2% |
| Chemical additive | 0.3% - 2% | 0.5% - 1 % |
| Water | 40% - 60% | 45% - 50% |

With increasing fraction of catalyst nanoparticles, the pressure drop increased (due to their small particle size). With less catalyst compared to inert silica sand, the pressure drop decreased, but the catalytic activity dropped as well. Within the tested ranges, the amount of ceramic binder and chemical additive did not show any effect. The necessary amount of water increased with larger amounts of nanoparticles. The smaller the catalytic or inert particles, the more water was needed.

The mass fractions given above were tested only for the catalysts given above and under the investigated operating conditions. For different reactor types, gas flow rates, particle sizes etc., other mass fractions might be better suited.

It is to be understood that the invention is not restricted to the examples given above, and that the parameters in the method of producing the porous ceramic, the composition of the ceramic, and the uses of the ceramic reactors are in no way restricted to the examples given above.

## Claims

1. A method of producing a rigid catalytically active porous ceramic, the method comprising:
providing catalyst particles comprising a catalytically active material or a precursor thereof;
mixing said catalyst particles with a ceramic binder, a carrier liquid, at least one chemical additive for promoting dispersion and/or controlling gelation, and, optionally, substantially inert carrier particles to obtain a slurry having a gel- or paste-like consistency; and
heating said slurry to substantially evaporate said carrier liquid to obtain a rigid, catalytically active porous ceramic.

2. The method of claim 1, wherein said slurry is transported to a reaction zone, in particular, by a flow method, and wherein said slurry is heated in said reaction zone to substantially evaporate said carrier liquid so as to obtain said rigid, catalytically active porous ceramic *in situ* in said reaction zone.

3. The method of claim 1, wherein said slurry is applied to a substrate, and wherein said slurry is heated on said substrate to evaporate said carrier liquid so as to obtain said rigid, catalytically active porous ceramic bonded to said substrate.

4. The method of claim 3, wherein the step of applying said slurry to said substrate comprises printing said slurry to said substrate by a printing process, in particular, by a printing process selected from the group consisting of jet printing, gravure printing, relief printing, and screen printing.

5. The method of any of the preceding claims, wherein the step of mixing comprises admixing substantially inert carrier particles, said carrier particles having a larger average size than said catalyst particles.

6. The method of claim 5, wherein said carrier particles have an average size that is at least a factor of 100 larger than the average size of said catalyst particles.

7. The method of claim 5 or 6, wherein said catalyst particles have an average size below approximately 1 micrometer.

8. The method of any of the preceding claims, wherein said catalyst particles comprise one or more catalytically active metals and a catalytically inert base material.

9. The method of any of the preceding claims, wherein said carrier liquid substantially consists of water.

10. The method of claim 9, wherein said chemical additive is an acid, in particular, an acid selected from the group consisting of carboxylic, nitric, and hydrochloric acids and salts thereof.

11. The method of claim 9 or 10, wherein said slurry comprises 10%-16% catalyst particles, 33%-40% inert particles, 0.5-5% ceramic binder, 0.3%-2% chemical additive and 40%-60% carrier liquid, in particular, water.

12. A catalytically active porous ceramic obtainable by a method as claimed in any of claims 1 to 11.

13. A catalytically active porous ceramic having a continuous open-cell structure forming continuous channels, said porous ceramic comprising
catalyst particles comprising a catalytically active material;
catalytically inert particles; and
a ceramic material;
said inert particles having an average size that is at least a factor of 100 larger than the average size of said catalyst particles, said catalyst particles being bonded to the surface of said inert particles by said ceramic material.

14. Use of a catalytically active porous ceramic according to claim 13 or 14 in a catalytic partial oxidation process of a hydrocarbon feedstock, in a steam reforming process of a hydrocarbon feedstock, in a carbon dioxide reforming process of a hydrocarbon feedstock, in a water gas shift reaction process, in a catalytic combustion process of a combustible gaseous organic feedstock, or in any other catalytic high-temperature reaction process requiring a chemically and thermally stable reactor material with a very high surface-to-volume ratio at a potentially large gas throughput.
